# EUROPEAN PATENT SPECIFICATION

(11) **EP 3 205 464 B1**
(45) Date of publication and mention of the grant of the patent: **11.01.2023**
(21) Application number: 17155185.6
(22) Date of filing: 08.02.2017
(51) Int. Cl.: B26D 1/12, B23K 26/342, A01F 29/09, A01D 34/73, C21D 9/00, B26D 1/00

(54) **LASER CLAD CUTTING BLADE FOR AGRICULTURAL CUTTING COMPONENTS**
LASERPLATTIERTE SCHNEIDKLINGE FÜR LANDWIRTSCHAFTLICHE SCHNEIDKOMPONENTEN
LAME PLAQUÉE PAR LASER POUR DES COMPOSANTS DE DÉCOUPE AGRICOLES

(30) Priority: 12.02.2016 US 201615043185
(43) Date of publication of application: 16.08.2017
(73) Proprietor: Kondex Corporation, Lomira, WI 53048 (US)
(72) Inventor: Stoffel, Neal J., Campbellsport, WI Wisconsin 53010 (US); Sotelo, Juan G., Fond du Lac, WI Wisconsin 54937 (US); Johnson, Keith A., Kewaskum, WI Wisconsin 53040 (US); Bechler, Michael A., West Bend, WI 53095 (US)
(74) Representative: Hoeger, Stellrecht & Partner Patentanwälte mbB

(56) References cited:
- WO-A1-2013/134397
- DE-U1-202010 007 393
- US-A- 5 823 449
- US-A1- 2007 163 128
- US-B1- 6 402 438
- US-B2- 7 677 843

## Description

### FIELD OF THE INVENTION

This invention generally relates to a laser clad cutting edge for agricultural cutting components.

### BACKGROUND OF THE INVENTION

Laser clad technology on cutting implements is known as suggested by U.S. Patent No. 7,677,843 to Techel et al. The present disclosure takes a much different, improved and novel approach to cutting implements, which particular application and benefit in agricultural blades (also referred to as cutting blades), but that also may be used in paper blades, forestry related blades, plastic processing blades and the like.

Other prior publication includes U.S. 2007/0163128 to Tarrerias. However, that is limited to applications with a single strength linear cutter edge, and not envisioned for agricultural crops such as hay, stalk or silage; such as may be used in feed mixers. A concept for feed mixers is shown in U.S. Patent 5,823,449, however, that relies upon brazing on solid carbide.

WO 2013/134397 A1 according to figs. 19A to 19G does not disclose a cutting edge formed by the cutting blade body being of the first material because the cutting edge is formed only by the laser cladding, covering the converging or intersecting surfaces forming the cutting edge.

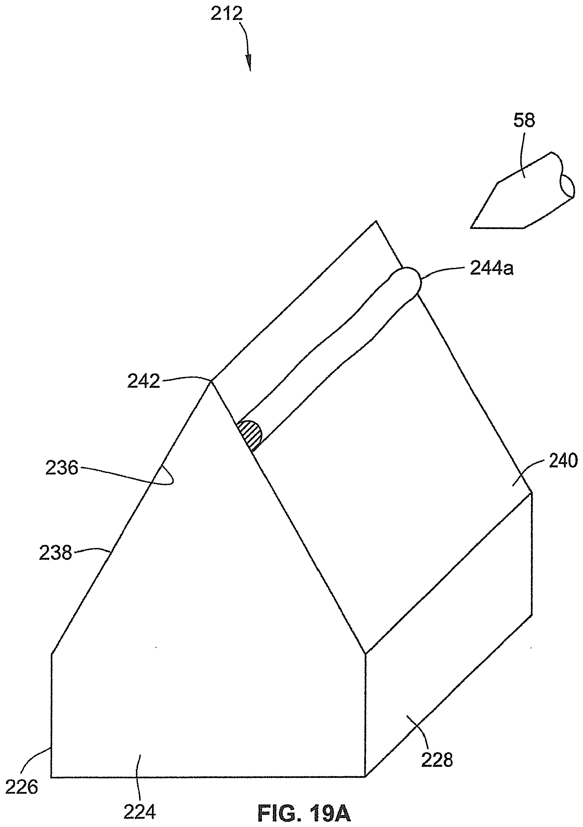

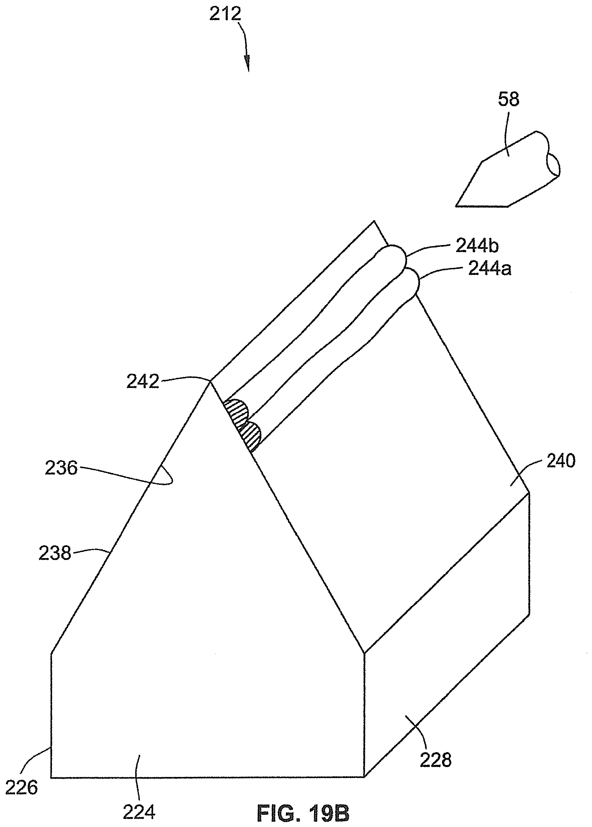

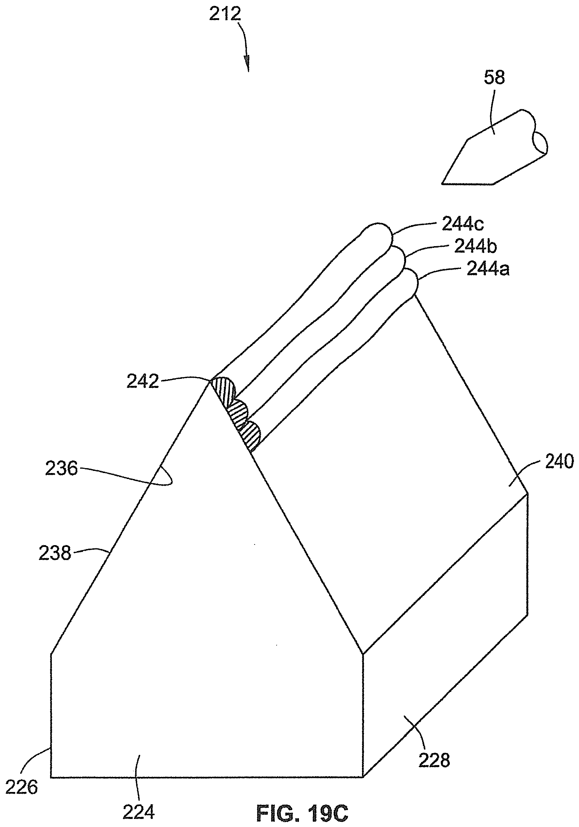

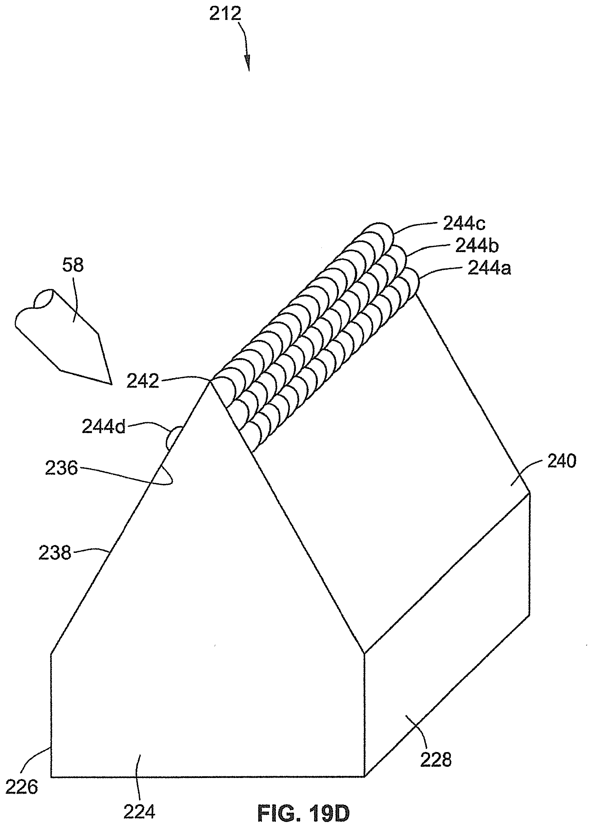

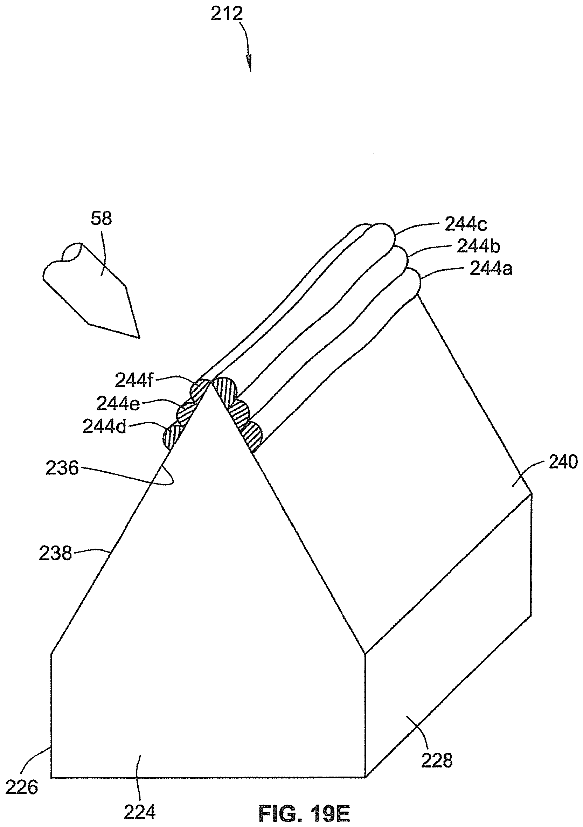

In particular when referring to figs. 19A to 19G a cutting edge is formed by applying and grinding the laser cladding which corresponds to the second material to two intersecting surfaces, which are surfaces of the cutting blade body made of the first material and which are not contributing to the cutting edge because the cutting edge is solely formed by the cladding.

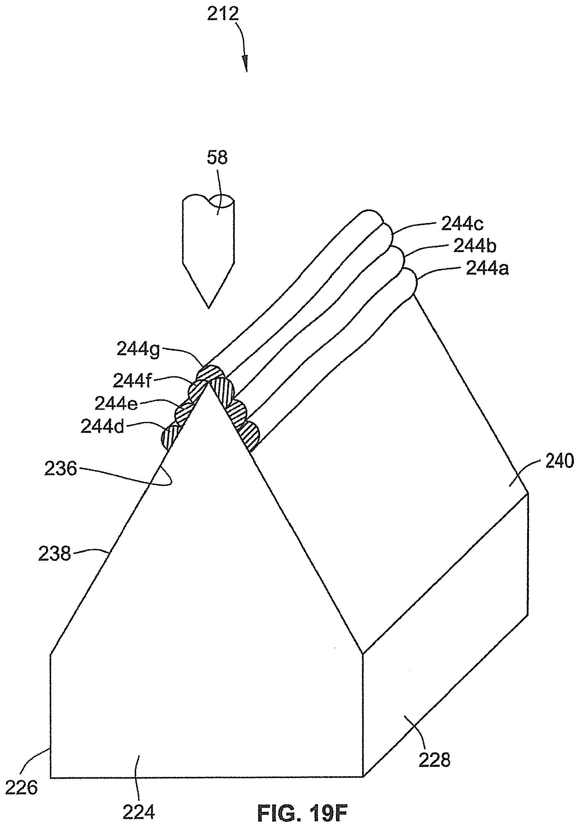

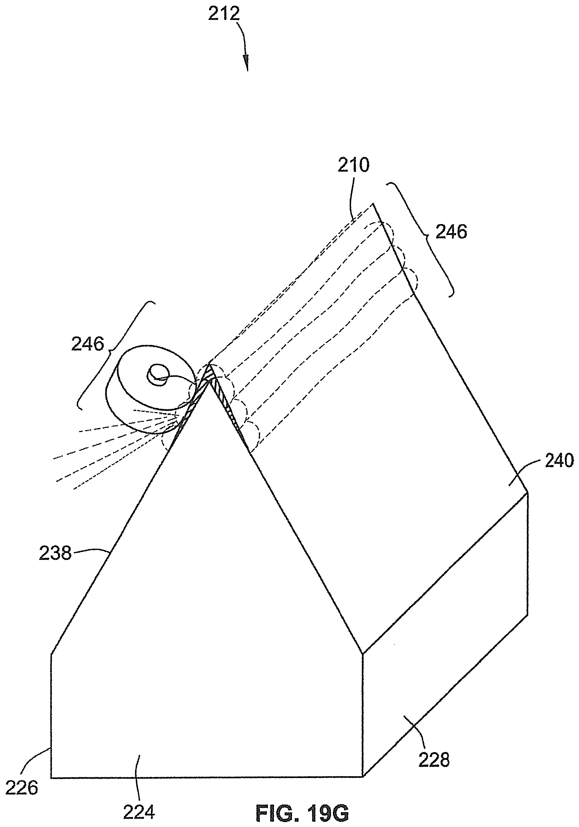

Consequently the laser cladding forms the cutting edge whereas the cutting blade body made of the first material does not form the cutting edge, as shown in fig. 19F and 19G.

### BRIEF SUMMARY OF THE INVENTION

This invention is to aid in the prevention of premature wear and dulling to the cutting edge of agricultural blades. The design being proposed will reduce the wear of the cutting edge most commonly caused by the continuous cutting of crops or other commodities. Also, another major factor in the premature dulling of the blade that this invention will help prevent is chipping from foreign materials such as rocks, stones, or ice contacting the blade edge causing damage to the blade edge reducing the blades ability to cut effectively. A further benefit of this invention is the prevention of erosion of the cutting blade body at the base of the cladding.

The present invention is defined by a cutting blade according to the features of claim 1 and preferred embodiments according to the features of claims 2 to 10.

The present invention is further defined by a method of forming an agricultural rotary cutting blade according to claim 11 and preferred embodiments according to the features of claims 12 and 13.

Additional advantageous aspects of the present disclosure are directed to a rotary cutting blade. The rotary cutting blade includes a cutting blade body having a first side surface and a second side surface. The cutting blade body is formed of a first material. The cutting blade body also includes a beveled surface portion between the first side surface and the second side surface, so that the intersection between the beveled surface portion and the second side surface defining a cutting edge. A second material is applied the beveled surface portion so that the second material covers at least 25 percent of the beveled surface portion. The second material provides at least one of greater hardness and wear resistance relative to the first material.

In one aspect of the disclosure, the second material is a laser cladding material.

In another aspect of the disclosure, the cutting blade body includes a mounting aperture and a plane of rotation, and the second side surface is parallel to the plane of rotation.

In another aspect of the disclosure, the cutting blade body includes a mounting aperture and a plane of rotation. The second side surface is not parallel to the plane of rotation, and is a protected surface when the rotary cutting blade is rotated in the plane of rotation.

In another aspect of the disclosure, the second material does not extend onto the second side surface.

In another aspect of the disclosure, the second material is applied to the beveled surface portion at a first thickness proximate to the cutting edge, and at a second thickness distal to the cutting edge. In some embodiments, the first thickness is greater than the second thickness. The first thickness may be between 0.3 mm and 3.0 mm, and the second thickness is between 0.3 mm and 3.0 mm.

In another aspect of the disclosure, the rotary cutting blade is heat treated. In some aspects, the rotary cutting blade is austempered.

In a preferred aspect of the disclosure, the second material contacts the cutting edge.

In another aspect of the disclosure, the second material covers at least 50 percent of the beveled surface portion. In yet another aspect of the disclosure, the second material covers at least 80 percent of the beveled surface portion.

In another aspect of the disclosure, a method of forming a rotary cutting blade is provided. The method includes the step of providing a cutting blade having a cutting blade body. The cutting blade body includes a first side surface and a second side surface, wherein the cutting blade body is formed of a first material. The method also includes the step of providing a beveled surface portion between the first side surface and the second side surface, wherein the intersection of the second surface and the beveled cutting surface define a cutting edge. The method further includes laser cladding a second material to the beveled surface portion, wherein the second material does not extend onto the second side surface.

In one aspect of the method, the rotary cutting blade is heat treated after laser cladding. In some aspects of the method, a portion of the rotary cutting blade is heat treated after laser cladding. In another aspect of the method, the entire rotary cutting blade is austemptered to a hardness lower than the first hardness.

In another aspect of the disclosure, a rotary cutting blade is provided. The rotary cutting blade includes a generally planar top surface and a generally planar bottom surface. The generally planar bottom surface is parallel to a rotational plane of the rotary cutting blade. The rotary cutting blade also includes a beveled surface portion between the top surface and the bottom surface, the intersection between the beveled surface portion and the bottom surface defining a cutting edge. The rotary cutting blade also includes a hard facing material applied to the beveled surface portion, wherein the hard facing material does not extend to cover the generally planar bottom surface.

In one aspect, the entire rotary cutting blade is heat treated.

In another aspect, one or more portions of the rotary cutting blade are heat treated.

In other aspects, a hard facing material is applied to the beveled surface portion at a first thickness proximate to the cutting edge, and a second thickness distal to the cutting edge.

The solutions in accordance with the present invention are set out in the appended claims and comprise some of the following features.

An agricultural rotary cutting blade comprising: a cutting blade body, the cutting blade body having a first side surface and a second side surface, wherein the cutting blade body is formed of a first material; the cutting blade body having a beveled surface portion between the first side surface and the second side surface, the intersection between the beveled surface portion and the second side surface defining a cutting edge; a second material applied to the beveled surface portion of the cutting blade body wherein the second material is a laser cladding material, having laser cladding beads not further sharpened to form a sharpened tip at a linear cutting edge, wherein the second material does not extend onto the second side surface, wherein the second material covers at least 25 percent of the beveled surface portion, and wherein the second material provides at least one of greater hardness and wear resistance relative to the first material and reduces wear experienced by the beveled surface.

The rotary cutting blade, wherein the second material is a laser cladding material.

The rotary cutting blade, wherein the cutting blade body comprises a mounting aperture and a plane of rotation, and wherein the second side surface is parallel to the plane of rotation.

The rotary cutting blade, wherein the cutting blade body comprises a mounting aperture and a plane of rotation, and wherein the second side surface is not parallel to the plane of rotation and is a protected surface when the rotary cutting blade is rotated in the plane of rotation.

The rotary cutting blade, wherein the second material is applied to the beveled surface portion at a first thickness proximate to the cutting edge, and at a second thickness distal to the cutting edge.

The rotary cutting blade, wherein the first thickness is greater than the second thickness.

The rotary cutting blade, wherein the first thickness is between 0.3 mm and 3.0 mm, and wherein the second thickness is between 0.3 mm and 3.0 mm.

The rotary cutting blade, wherein the rotary cutting blade is heat treated.

The rotary cutting blade, wherein the rotary cutting blade is autempered.

The rotary cutting blade, wherein the second material contacts the cutting edge.

The rotary cutting blade, wherein the second material covers at least 50 percent of the beveled surface portion.

A method of forming an agricultural rotary cutting blade, comprising the steps of: providing a cutting blade having a cutting blade body, the cutting blade body having a first surface and a second side surface, and wherein the cutting blade body is formed of a first material; providing a beveled surface portion on the cutting blade body between the first surface and the second surface wherein the intersection of the second surface and the beveled cutting surface defines a cutting edge; laser cladding a second material to the beveled surface portion, wherein beads of the second cladding material are not further sharpened to form a sharpened tip at a linear cutting edge, wherein the second material does not extend onto the second side surface, and wherein the laser clad material provides at least one of greater hardness and wear resistance relative to the first material and reduces wear experienced by the beveled surface.

The method, wherein the rotary cutting blade is heat treated after laser cladding.

The method, wherein a portion of the rotary cutting blade is heat treated after laser cladding.

The method, wherein the entire rotary cutting blade is autemptered to a hardness lower than the first hardness.

A rotary cutting blade comprising: a generally planar top surface and a generally planar bottom surface, the generally planar bottom surface being parallel to a rotational plane of the rotary cutting blade; a beveled surface portion between the top surface and the bottom surface, the intersection between the beveled surface portion and the bottom surface defining a cutting edge; a hard facing material applied to the beveled surface portion, wherein the hard facing material does not extend to cover the generally planar bottom surface.

The rotary cutting blade, wherein the entire rotary cutting blade is heat treated.

The rotary cutting blade, wherein one or more portions of the rotary cutting blade are heat treated.

The rotary cutting blade, wherein the hard facing material is applied to the beveled surface portion at a first thickness proximate to the cutting edge, and a second thickness distal to the cutting edge.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a top view of an augur knife (also referred to as "mixer blade") having a plurality of laser clad cutting edges formed thereon in accordance with a first example;
FIG. 2 is a side view of the auger knife shown in FIG. 1;
FIG. 3 is a cross section view taken about A-A in FIG. 1;
FIG. 4 is an enlarged detail view taken about circle B in FIG. 3, shown in partial schematic shown before and after sharpening with the portion that is being ground off during sharpening being shown as well as lines indicating profile after sharpening;
FIG. 5 is a top view of a clock-wise knife (also referred to as "crop cutting blade") having a laser clad cutting edge in accordance with a second example;
FIG. 6 is a front side view of the blade shown in FIG. 5;
FIG. 7 is a right hand side view of the blade shown in FIG. 5;
FIG. 8 is an enlarged detail view of a portion of the knife taken about circle A in FIG. 7;
FIG. 9 is a top view of an alternative example of a mixer blade similar to the first example of FIG. 1, but employing different laser cladding;
FIG. 10 is a side view of the mixer blade shown in FIG. 9;
FIG. 11 is a cross-section taken about section A-A in FIG. 9;
FIG. 12 is a top view of an mixer blade similar to FIGS. 1 and 9, but employing yet a further alternative example with a different cutting edge support surface and laser cladding profile;
FIG. 13 is a side view of the blade shown in FIG. 12;
FIG. 14 is a cross-section taken about section A-A in FIG. 12;
FIGS. 15 and 16 are side elevation and top views of a feed mixer employing the mixer blade of any of examples of the auger knife discussed above;
FIGS. 17 and 18 are examples of drum mowers and disc mowers shown in prospective views, which include the blade utilized in the examples of FIGS. 5-7;
FIGS. 19a-19g are a progression of perspective and partially schematic views of laser cladding adhesive buildup upon a blade edge in accordance with an example of the present invention and that may be used with any of the examples discussed above;
FIG. 20 is another cross section and partly schematic view of methodology for laying multiple laser clad beads upon the cutting edge support surface in accordance with a further example of the present invention, with dashed lines illustrating the outline before sharpening and solid lines showing after sharpening.
FIG. 21 is a top view of a clock-wise knife (also referred to as "crop cutting blade") having a laser clad cutting edge in accordance with an embodiment of the present invention;
FIG. 22 is a right hand side view of the blade shown in FIG. 21;
FIG. 23 is a front side view of the blade shown in FIG. 21;
FIG. 24 is an enlarged detail view of a portion of the knife shown in FIG. 23;
FIG. 25 is a top view of a grass mowing blade in accordance with another embodiment of the present invention;
FIG. 26 is a cross-sectional view of the blade shown in FIG. 25; and
FIG. 27 is an enlarged detail view of a portion of the blade shown in FIG. 26.

### DETAILED DESCRIPTION OF THE INVENTION

Examples cutting blades are designed to improve the surface properties related to the wear characteristics of metals used to manufacture agricultural cutting blades. This design specifically targets the cutting edge of agricultural blades and replaces that edge by building an edge on the blade using hard/wear resistant materials deposited using laser cladding technology.

It is common in today's industry to apply hard coatings on the top of or behind the cutting edge of the blade/knife. Also, it is common to see inserts brazed onto the cutting edge of the blade. Embodiments of the present invention differ from these already common concepts by using laser cladding technology to create the actual cutting edge of the knife and not to support an existing edge.

The hard/wear resistant laser clad material being referred to in various embodiments of the invention is material composed of a medium to high percentage of hard particles. These hard particles can be: Tungsten Carbide, Titanium Carbide, Chrome Carbide, Iron Carbide, Diamond, Ceramics, or any other high hardness particles in the range of HV 1200-2500 (Vickers scale hardness).The high hardness particles are then bonded and held in place by a base material composed of various metal alloys.

Laser cladding is the process of cladding material with the desired properties and fusing it onto the substrate by means of a laser beam. Laser cladding can yield surface layers that when compared to other hard facing techniques or standard blade material can have superior properties in terms of hardness, bonding, corrosion resistance and microstructure.

The design being introduced is to create a surface on the existing blade where an amount of laser cladding can be targeted and built up (e.g. as separate stacked layers and/or at different locations and/or approaches) to form a blunt bead of laser cladding along an edge that will become the cutting edge of the blade. Once the laser cladding material has been applied to the desired surface a second operation can be performed to create a sharp cutting edge. This secondary sharpening operation would include but not be limited to machining, grinding, and lapping.

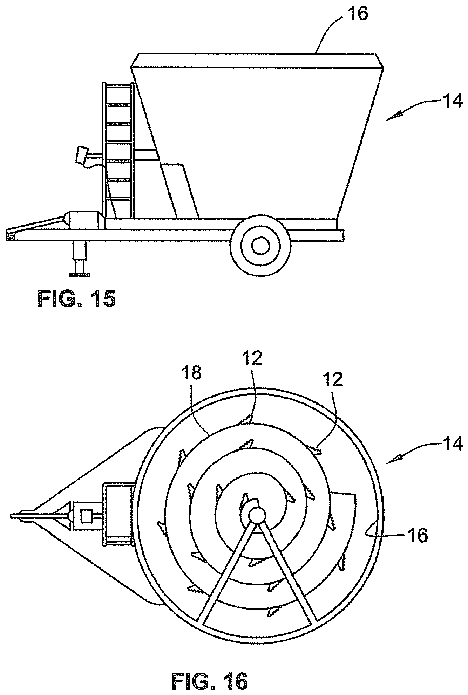

One example is a laser clad cutting edge 10 on a mixer blade 12 used in an agricultural feed mixer 14. As shown in FIGS. 15-16, these feed mixers 14 are large heavy duty steel constructed chambers used to mix bales of hay, long roughage and other commodities. Inside these chambers 16 are large augers 18 with steel blades attached to each auger. The auger design along with the blade profile and pattern come in a variety of configurations and options depending on the feed mixer. The main purpose of the mixer blades 12 is to continuously and efficiently cut while also mixing the selected commodity. For these blades to perform at a high level they need to hold a cutting edge that allows for the cutting/mixing process to take place.

This use of laser cladding build up 20 to create the cutting edge 10 greatly aids in the blades 12 effectiveness to perform under multiple circumstances for longer periods of time. Using laser cladding as a way to create the cutting edge 10 has multiple key advantages in this application. First, due to the increased surface properties of the cutting edge the blade will hold its sharpness for a longer period of time. This in turn prevents the blade from being re-sharpened or replaced as often as a standard mixer blade. Second, with the improved properties of the blade edge the mixer does not require as much torque to cut and mix resulting in less horsepower used to run the equipment. With less horsepower being consumed by the mixer this will ultimately save the operator money in fuel consumption. Lastly, another key element in using laser cladding to create the blade edge is the bonding characteristics of the laser cladding process. This helps prevent any chipping of material or insert breakage commonly seen with current inserted mixer blades on the market today. The style of mixer blade that uses brazed inserts as its cutting edge can be susceptible to the insert breaking off from the blade body and entering the mix. This leaves the cattle or livestock vulnerable to consuming and digesting these foreign objects that were introduced to their feed.

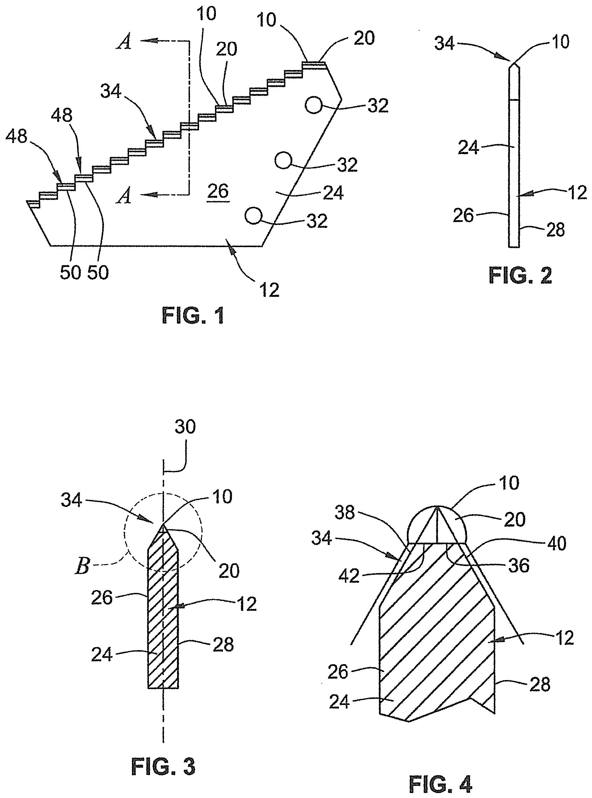

Turning in greater detail to the cutting blade, which is shown as a mixer blade 12 in FIGS. 1-4, it can be seen that it is provided with a cutting blade body 24. The cutting blade body 24 includes opposite top and bottom side surfaces 26, 28 that generally define and/or are aligned generally parallel with each other and the main plane 30 of the overall body 24. The cutting blade body 24 may be formed of stock steel material and formed as a blank created from sheet or plate stock material. Three specifically arranged and aligned mounting holes 32 are provided, which correspond to mounting studs (e.g. mounting studs having this corresponding pattern and alignment and spacing) on the agricultural feed mixer 14 shown in other figures (see e.g. FIGS. 15 and 16).

The cutting blade body is provided at its periphery end surface 34 with a cutting edge support surface 36 upon which the laser cladding buildup 20 can be built. The periphery end surface 34 generally extends transverse and typically perpendicular between the top side surface 26 and bottom side surface 28. It should be noted that the cutting edge support surface can include first and second converging surfaces that are joined at an end tip 42, which in this case is a flat surface bridging the distance between the converging surfaces 38, 40. In this example, each converging surface 38, 40 projects from the top side surface 26 and bottom side surface 28, respectively, at oblique angles. Thus, the converging surfaces generally extend toward the other side surface. It is also envisioned, however, that one of the converging surfaces may simply be a portion top or bottom side surfaces 26, 28 generally at the proximity of the cutting edge 10 and at the location of the peripheral end surface 34. In this alternative example, there might be one converging edge at an oblique angle that extend toward the other side surface and a corresponding span along the main plane of which would be and provide for the second converging surface provided by the end portion of one of the top or bottom side surfaces 26, 28.

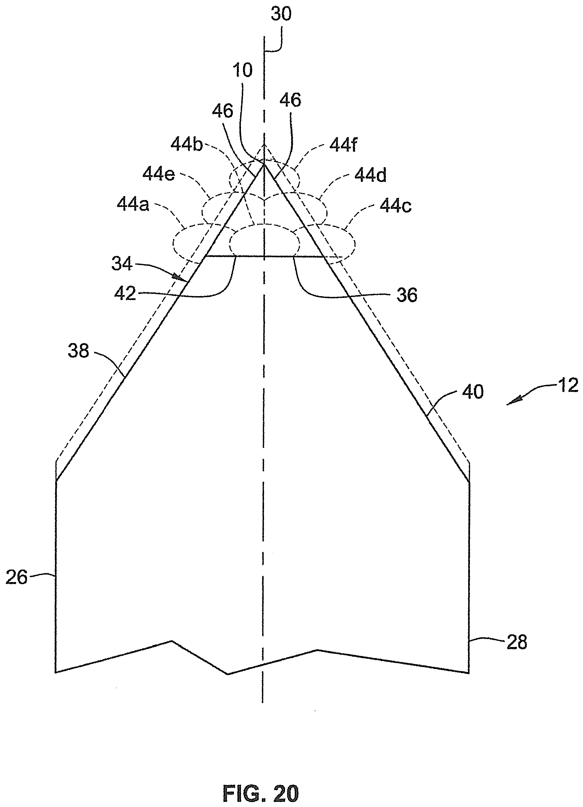

To provide for the laser clad cutting edge 10, first, laser cladding is built up upon the cutting edge support surface 36 to provide laser cladding buildup 20, which may comprise several layers 44a-f of laser cladding in overlap as shown in FIG. 20. The length of each layer (also may be referred to as a bead) is laid longitudinally and thereby run along the cutting edge generally parallel thereto. By generally parallel, it is meant parallel or about parallel (for example less than 20 degrees difference). Layers are laid to the base steel blade material side by side overlapping each other at adjacent sides to cover the base metal material, and layers are also built on top of earlier laid layers that do not touch the base metal and are laser clad layers in overlap in complete overlapping relation. As shown in this example, 2 or more, typically at least four layers and as shown, six layers in an example, which are built up upon each other by virtue of multiple passes of a laser cladding tool over the different adjacent side by side locations and/or over the top at the same location as shown in this example or alternatively other in different locations and/or from different approaches as shown in other examples discussed herein.

As shown in this example, the laser cladding buildup 20 is generally confined to the flat end tip 42, but it may also overlap and extend upon the first and second converging surfaces 38, 40. By extending over the converging surfaces as shown in other examples, an advantage is gained during use in agricultural applications in that erosion of the base steel substrate material is prevented or minimized along the converging sides during use and contact with agricultural stalk and crop material, especially at the interface between the cladding material and the base steel material.

After the laser cladding buildup 20 is provided with multiple layers 44 built upon each other in side by side relation and/or on top of each other, then sharpening of the buildup material may be conducted such as by a grinder or other operation to remove material along opposed side of the laser cladding buildup 20 to create converging flanks that meet at a sharpened tip, which forms the laser clad cutting edge 10. In some example, the flanks at the base or intersection where the laser cladding buildup is joined to the end tip, the flanks may create a wider span in cross section as compared with the span of the end tip 42. As a result, any laser clad material remaining on the first or second converging surfaces 38, 40 may remain such that the laser clad material forms an enlarged sharpened head overlaid upon the end tip 42 and where the laser cladding material ends, a reduced neck region may be formed. Alternatively, the material may be removed and sharpened down to the same profile as the existing converging surfaces 38, 40 on the preformed blank or may be ground even further to reduce converging surfaces 38 and 40 further.

Typically, and for different examples discussed herein, the end tip 42 may span between 0 and 5,1 millimeters (0 and .2 inches). The flank length of each converging flank 46 may be between 0,25 and 1,27 millimeters (.1 and .5 inches). Typically, the laser clad buildup from the terminating apex of the end tip 42 to the outer most extent of the laser clad buildup (e.g. a maximum thickness measured perpendicular to main plane of the laser cladding material may be between 1,27 and 7,62 millimeters (.05 and .3 inches). Individual bead layers may be laid with a thickness between 1/4-3 millimeters and a width between 1 millimeter and 5 millimeters typically (although other machines may lay beads thicker and up to 19,05 millimeters (3/4 inch) wide. The length of any individual layer will depend and typically correspond to the corresponding length of the cutting edge may between 12,7 millimeters (1/2 inch) and 51 millimeters (20 inches) long. Typically the bead will run a length at least 5 times as long as it is wide. These parameters may apply to any example discussed herein.

Another feature that is provided as well as inventive aspect is the provision for laying the laser cladding at more than one location on the cutting blade body 24. For example, the cutting blade body is provided with multiple teeth arranged along the outer peripheral end surface 34, which provide different cutting edge segments 50 that make up the laser clad cutting edge 10. Thus, the laser cladding is not limited to one location, but can be applied at multiple locations in this manner as well.

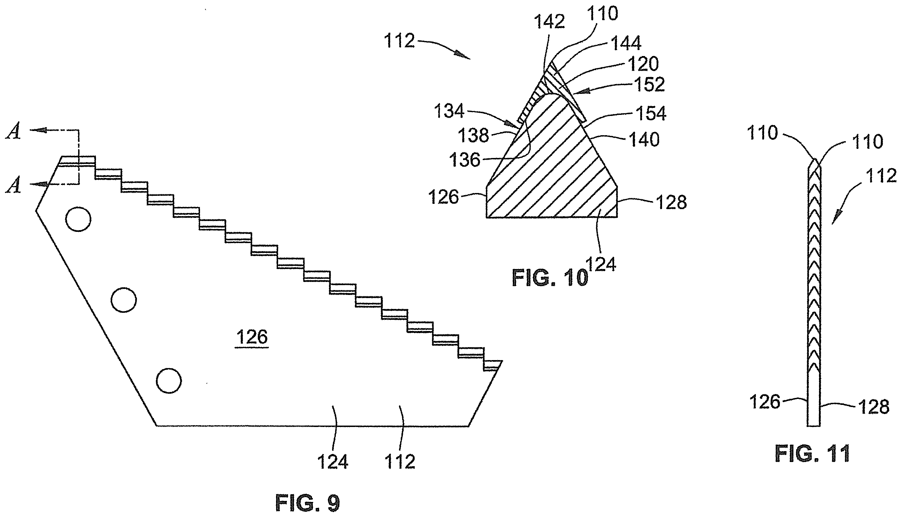

Turning to FIGS. 9-11, an alternative example of a mixer blade 112 is illustrated that is similar in all respects to mixer blade 12 and includes the same structures and features except for as otherwise described herein as it relates to how the laser cladding buildup 120 is provided as well as the configuration of the peripheral end surface 134 and end tip 142. As shown in this example, the first and second converging surfaces 138, 140 are joined by the rounded end tip 142 upon which the laser cladding buildup 120 is applied.

In this example, one and preferably at least two more layers are applied to the first converging surface 138 and likewise, one and preferably two or more layers are also applied to the second converging surface 140 all in at least partial overlapping relation. The layers 144 on the first converging surface overlap each other and partially overlap those applied to the second converging surface and likewise, those applied to the second converging surface overlap each other and partially overlap those applied to the first converging surface to overall provide the laser cladding buildup 120 that extends over the end tip 142. As can be seen, clad material is built up over the end tip 142 as well as along the converging surfaces 138, 140.

Further, this example provides an enlarged head 152 as a result of the laser clad buildup 120 that extends beyond the extents of converging surfaces 138, 140. As a result, a reduced neck 154 is formed behind the laser clad buildup. The reduced neck provides protection to the base steel material of the cutting blade body preventing erosion to the base steel material whereat the clad material is deposited and fused. To provide for this finished product, the sharpening of only some of the buildup 120 that may be less than one layer thick of removal or between 1-2 layers thick). As a result, the second material remains built up and overlapping relation along at least one of the converging surfaces and typically, both converging surfaces 138, 140. None of the base support material (e.g. steel) of the cutting blade body may be removed in some examples after cladding operations. This provides a thickened region proximate the cutting edge that is thicker in cross section then the cutting edge support surface 136 (according to the cross section shown in FIG. 10, which is taken through a plain extending through each of the side surfaces and generally perpendicular to the cutting edge).

Further, and as will be described in the next example and as shown in FIGS. 19a-19g, cladding with multiple layers 144 is accomplished with different approaches to the cutting blade body 124 with at least a first approach that is long and from the top side surface 126 and a second different approach that is at least partially from and along the bottom side surface 128.

Otherwise, the other additional features including laying at multiple locations upon teeth and the provision for mounting holes to enable use with the agricultural feed mixer 14 is also provided in this example.

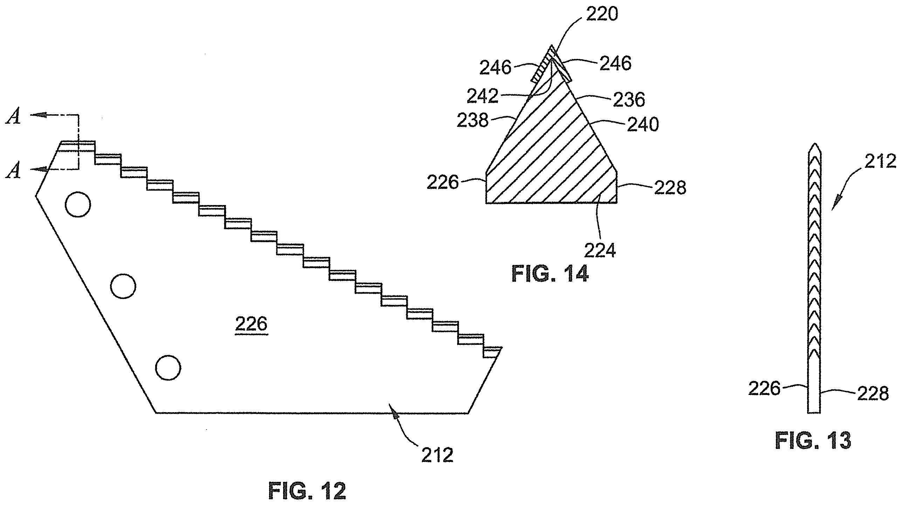

Turning now to FIGS. 12-14, yet a further example of the present invention is provided, which is similar to the last example of the mixer blade 112, however, in thisexample, the cutting blade body 224 include first and second converging surfaces 238, 240 that are adjoined at a sharpened end tip 242 (as opposed to rounded end tip 142 or flattened end tip 42 in previous examples). The sharpened end tip 242 provides along with the converging surfaces 238, 240 the cutting edge support surface 236. Likewise, the laser cladding buildup 220 is formed along the converging surfaces 238, 240 like the previous example.

Turning to additional FIGS. 19a-19f, a progression of forming different layers 244 a-g on opposing sides of the converging surfaces 238, 240 is shown with different approaches of a laser clad tool 58 that approach the cutting blade body 224 alternatively from a top side surface 226 and bottom side surface 228 in alternating fashion to form layers 244 a-g as shown in this example. It will be appreciated that more or less layers may be formed, but generally at least four layers are performed in most examples.

Further, it can be seen that the layers partially overlap each other with the layers on opposing sides overlapping partially at the end tip 242 and with layers on the same sides overlapping each other in substantially complete relation to sandwich intermediate layers therebetween. As can be seen each layer 244a-g is laid in a different location and spacing from the end tip, with adjacent layers in contact and thereby partial overlap. This overall, provides for a laser clad buildup 220 on the cutting edge support surface 236, which may be sharpened as shown in FIG. 19g by way of a grinding which removes material on each side of the laser cladding buildup 220 to create converging flanks 246. This provides, when sharpened, an overall laser clad cutting edge 210 which can then be used for the agricultural feed mixer 14 as shown in other figures. Preferably, prior to sharpening and after all of the layers 244 a-g are built up upon the cutting edge support surface 236, a heat treatment may be performed to harden and temper the combination of the steel cutting blade body and the laser clad buildup. Thereafter, it can be sharpened to form the cutting edge to form a sharpened edge.

As to application of individual layers 244 a-g (or the other layer 144 or 44 A-F in prior examples see also FIG. 20), the teachings and disclosure of U.S. patent number 8,096,221 to Tarrerias or U.S. patent number 7,677,843 to Techel et al. may be applied including any of the materials and additional treatment indicated in those disclosures.

It should be noted that any of the parameters and discussion of one of the examples is generally applicable to the parameters and may be applied and equally pertains to the disclosure of other examples in this application.

Examples also relate to the crop cutting blades 60 of a machine for severing standing crops from the ground to initiate a harvest process, and more particularly to an agricultural mower (such as drum mower 62 or disc mower 64) incorporating a rotary disc-cutter bar 68. The rotary disc cutter-bar 68 is made up of a number of transversely oriented cutter modules having rotatable discs 66 or 67 and carrying the cutting blades 60 to sever standing crop by impact. The cut crop is then conveyed to a conditioning mechanism before being discharged to the ground for drying and subsequent harvesting.

In the use of these mowing machines, the cutting blades are subjected to extremely abrasive wear conditions, and the wear is usually concentrated to the edge and subsequently the tip of the cutting blade causing this blade edge and knife tip to become rounded and dull. As the blade edge and tip continue to wear in this manner, the stalks of the crop being cut tend to slide around the outer edge of the cutting blades, causing a number of major problems. This continuous sliding effect multiplies and accelerates the wear on the cutting edge and tip of the cutting blade. The stalks of the crop slide off of the cutting blades instead of being cut. Stalks of the plant material can also be very abrasive themselves, so one would expect that if the stalk is cut upon impact it doesn't slide, thus it doesn't exacerbate the wear on the edge and tip of the cutting blade.

In addition to the excessive cutting blade wear this sliding effect causes, it also stands to reason that if the individual stalks of plant material are sliding off the end and not being cut on every rotation of the disc 66, there is a cutting efficiency loss. The plant material continues to be pushed forward in the direction of machine travel. Eventually the plant stalk material overcomes the pushing force because of the stalk being anchored in the ground, and is severed by the blade on the very tip that is the most dull. Consequently, two very important considerations are impacted by this effect. One, there is a desire in this process to have a clean cut which is of a consistent height from ground level. This helps in the re-growth effort of the crop being grown. In this case, both of those desires will not be met. Two, because of the fact that a large percentage of the crop stalks are being severed by the dullest part of the cutting blade, it takes a much greater force to keep the discs rotating at the desired velocity. This equates to higher horse power requirements and increased fuel usage which is one of the main components in the cost of performing this process.

An example of using laser cladding 70 to create the cutting edge 72 of this blade 60 has several benefits. First, because of laser claddings increased surface properties the edge of these blades would be more resistant to wear. Allowing these blades to cut on contact for a longer period of time and preventing the excessive tip wear seen on standard blades. Secondly, because of the previously stated advantage these blades wouldn't need to be replaced by the operator as often. Lastly, because of the characteristics of laser cladding these parts will be more resistant to chipping and deformation compared to other hard coated parts on the market today.

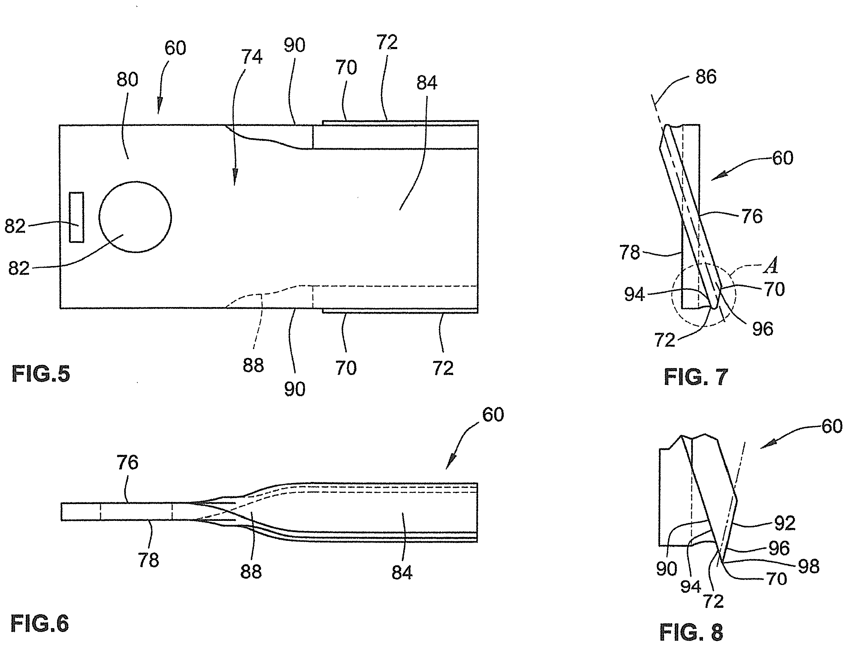

Turning in greater detail to the crop cutting blade 60, it can be seen from FIGS. 5-8 that it is provided with a cutting blade body 74 having opposed top and bottom side surfaces 76, 78. The cutting blade body 74 includes a base section that includes mounting apertures 82 for securing the cutting blade 60 to one of the mowers 62, 64, as well as a cutting wing section that define a main plane 86. As can be seen, the cutting wing section is angularly offset from the base section through deformation of a transition section 88. These particular blades are reversible to include different locations where laser cladding 70 is applied along the peripheral end surface and that can provide two sections of a cutting edge support surface 92. At each section of the cutting edge support surface 92, a first converging surface 94 and a second converging surface 96 are provided, which are joined at an end tip 98, which may be one of rounded, flat or pointed, each of which has different features and advantages. The laser cladding 70 can be built up in several layers upon the cutting edge support surface 92 at the different sections or location in any of the ways previously mentioned for the first three examples as applied to the mixer blade described above, such as shown in FIGS. 19a-19f and/or FIG. 20.

In this example, it can also be seen that one of the converging surfaces 94 can be part of the top or bottom surfaces, that is the portion at the peripheral end surface 90 where converging towards the end tip 98 takes place.

In this example, it is shown that the laser cladding is merely situated on the end tip 98 and does not extend over either of the converging surfaces 94, 96. However, as per prior examples, and as shown schematically in relation to FIGS. 19a-19g, laser cladding can be done over the converging surfaces as well as the end tip to provide an increased head region at this location. Likewise, the laser cladding 70 is ground sharp to provide the cutting edge 72 formed into the laser clad 70, which is built up upon the cutting edge support surface 92.

In some rotary mowing applications, for example mowing grasses of lawns or golf courses, a rotary blade cuts the plant material primarily by impacting the plant or lawn material to sever it. Accordingly, for this to be effective, the blade needs to impact the material to be cut at a high rate of speed, upwards of 300 meter (300 feet) per second tip speed. Rotating a metal blade at this speed can be dangerous in that some mower blades are hardened through a heat treat process to reduce the amount of wear to the cutting area of the blade.

However, hardening cutting blade may also result in development of an undesirable property in the blade material. As a metallic blade is heat treated to higher hardness, it correspondingly becomes less ductile. Therefore, the wear resistance of the blade needs to be compromised (by lowering the hardness) in order to make it safer (higher ductility) for use in commercial and residential environments.

Some beveled rotary mowing blades are manufactured with a "self-sharpening" feature, whereby a portion of the face of the cutting edge which is opposite the bevel is hardened and/or hard-faced by application of a metallic hard-facing material. In use, the abrasive materials which are being cut will erode the softer metal on the bevel side leaving a sharp cutting edge at the junction of the bevel and the hard-face. This design may be especially effective in certain applications, such as agricultural chopping and grinding equipment.

Unfortunately, the "self-sharpening" design does not work as effectively on agricultural rotary cutting blades in other applications, such as commercial and/or residential rotary lawn mower blades. The environment in which these rotary moving blades are used can be particularly abrasive, and the softer material of the bevel side of the cutting edge erodes quickly, leaving the hard-faced edge exposed to the forces of cutting. The hard-facing material is very hard but also very brittle, and in use, the hard-faced cutting edge begins breaking off and separating from the cutting edge when there is not enough support from the softer, more ductile substrate part of the blade edge.

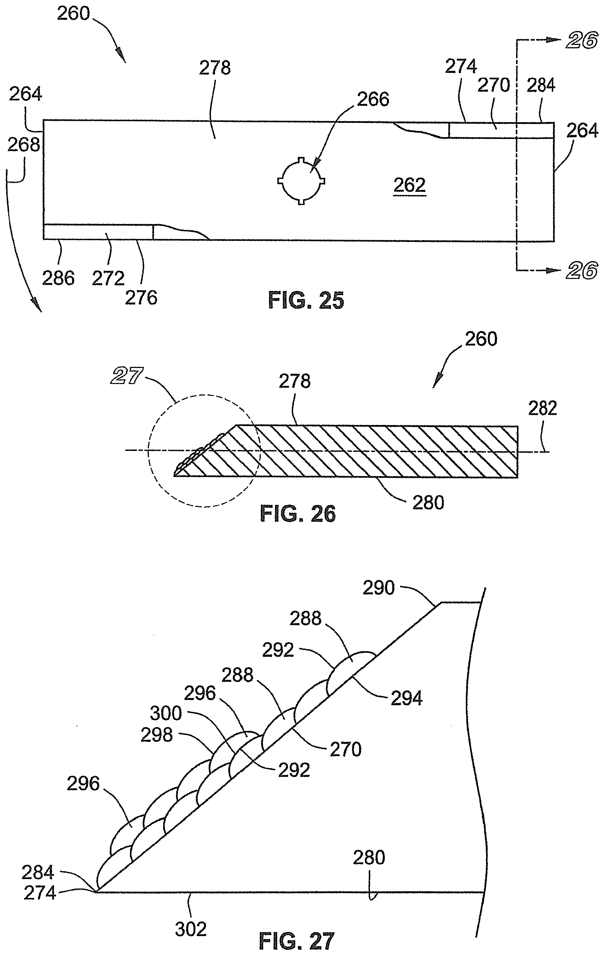

Referring to FIGs. 25-27, a rotary lawn mowing blade 260 is shown. Rotary blade 260 includes an elongated body 262 having opposed ends 264 and an annular central mounting aperture 266. From the perspective shown in FIG. 25, rotary blade 260 is configured to rotate counter-clockwise, as shown by arrow 268, around central mounting aperture 266, when rotary blade 260 is mounted to a cutting implement.

Rotary lawn mowing blade 260 is generally formed from a first material such as steel. The cutting blade body 260 may be formed of stock steel material and formed as a blank created from sheet or plate stock material. Material may be removed and sharpened down to the blade profile shown as the beveled surface 270 on the preformed blank.

As best shown in FIGs. 26 and 27, beveled surface 270 extends from first surface 278 to second surface 280. In the orientation shown, first surface 278 may be considered a top surface of the rotary blade 260 and second surface 280 may be considered a bottom surface of the rotary blade 260. Top surface 278 and bottom surface 280 are generally parallel to the plane of rotation 282. As used herein, the plane of rotation is the intended rotary orientation of rotary blade 260 when the blade 260 is mounted to a cutting implement via mounting aperture 266.

Beveled surfaces 270, 272 extend from ends 264 of rotary blade 260 towards central aperture 266 and along leading edges 274, 276 respectively. As shown in more detail in FIGs. 26 and 27, beveled surface 270 intersects bottom surface 280 at leading edge 274, thereby defining a linear cutting edge 284. Similarly, beveled surface 272 intersects bottom surface 280 at leading edge 276, thereby defining a linear cutting edge 286. It will be appreciated by those of skill in the art that the additional descriptions below relating to beveled surface 270 apply equally to opposing beveled surface 272.

When rotary blade 260 is rotated about a shaft or spline coupled to central mounting aperture 266 in the plane of rotation 282, linear cutting edges 284, 286 at leading edges 274, 276 impact a plant material, e.g. a grass, to be cut. The plant material to be cut also impacts upon and contacts beveled surfaces 270, 272, thereby lifting the cut material away from the ground surface.

In contrast, leading portion 302 of bottom surface 280 does not appreciably contact the cut material when rotary blade 260 is rotated in plane of rotation 282. The leading portion 302 therefore constitutes a protected surface that does not impact the plant or lawn material to be cut, and is less subject to abrasion aand resulting erosion of the material of the protected surface.

In some prior art embodiments, a hardening process is applied to leading portion 302 of bottom surface 280 proximate to leading edge 274. When leading portion 302 of bottom surface 280 of rotary blade 260 is harder in comparison to beveled surface 270, the blade material of beveled surface 270 distal to leading edge 274 will wear at a faster rate than the blade material of beveled surface 270 and leading portion 302 proximate to leading edge 274. In theory, this increase wear rate experienced at beveled portion 270 distal to linear cutting edge 284 will result in a blade that is self-sharpening, that is, the angle between bottom surface 280 and beveled surface 270 will decrease, thereby sharpening the linear cutting edge 284.

However, as discussed above, it has been determined that hardening the leading portion 302 of bottom surface 280 can wear away the more ductile material present at beveled surface 270, thereby leaving such hardened material unsupported by a more ductile material of beveled surface 270. As hardened material present at leading portion 302 of bottom surface 280 loses support it become more prone to brittle facture in the abrasive environments associated with lawn and grass moving. Thus, the self-sharpening design of some prior art designs is unexpectedly prone to premature blade wear, necessitating replacement sooner than would otherwise be required.

In contrast, the cutting blade 260 of the present invention is provided with a hard facing material applied to at least a portion of beveled surface 270. In a preferred embodiment, the hard facing material is a laser cladding material, shown as laser cladding beads 288 and 296. The hard facing material thereby reduces wear experienced by beveled surface 270 even in particularly abrasive cutting environments. However, the rotary blade 260 does not retain the self-sharpening feature attributable to more rapid wear of a softer, ductile metal at beveled surface 270.

In the embodiment shown in FIG. 27, the hard facing material is applied to approximately 80 percent of beveled surface 270. In other embodiments, the hard facing material is applied to at least 25 percent, at least 50 percent, at least 75 percent, or at least 90 percent of beveled surface 270. In a preferred embodiment, the hard facing material is not applied to the bottom side surface 280.

The laser cladding material may include at least one of the following: tungsten carbide, titanium carbide, chrome carbide, iron carbide, diamond, ceramic or other material having a Vickers scale hardness between HV 1200-2500. In a preferred embodiment, the laser cladding beads 288, 296 are not further sharpened to form a sharpened tip at linear cutting edge 284. In other embodiments, the tip may be sharpened by machining, grinding, or lapping to form a sharpened tip at linear cutting edge 284.

As best shown in FIG. 27, a first layer of laser cladding material is applied as a bead 288 to beveled surface 270. The length of each layer is laid longitudinally and thereby run along the linear cutting edge 284 and generally parallel thereto. Layers are laid to the base steel blade material side by side overlapping each other at adjacent sides to cover the base metal material at interface zone 294. In a particular embodiments, the first layer has a thickness between about 0.3 mm and 3.0 mm, and preferably between about 0.45 mm and 0.55 mm.

A second layer 296 is also shown built on top of first layer 288 on the top surface 300 if first layer 288. Second layer 296, and additional layers if provided, do not touch the base metal and are laser clad layers in complete overlapping relation with prior layers, e.g. layer 288. In a particular embodiments, the second layer has a thickness between about 0.3 millimeters and 3.0 millimeters, and preferably between about 0.45 mm and 0.55 mm.

As shown in this embodiment, two layers 288, 296 are built up upon beveled surface 270 by virtue of multiple passes of a laser cladding tool over the different adjacent side by side locations. In other embodiments, three, four, or five or more layers may be provided. In still other embodiments, second layer 296 need not be generally parallel to first layer 288. For example, first layer 288 may be provided in beads generally parallel to leading edge 274, while second layer 296 may be provided in beads

In the embodiment shown, the buildup of layers 288, 296 on beveled surface 270 need not be uniform across the entire area of beveled surface 270. In particular, first layer 288 is provided atop approximately 80 percent of beveled surface 270, while second layer 296 is provided atop approximately 50 percent of beveled surface 270. In the embodiment shown first layer 288 and second layer 296 are both provided proximate to leading edge 274 and extending upwards in the direction of upper rim 290 of beveled surface 270. Accordingly, top surface 298 of second layer 296 will be exposed to wear by cut materials in the area of beveled surface 270 most proximate to cutting edge 274, while top surface 292 of first layer 288 will be exposed to wear by cut materials distal to leading edge 274.

The laser cladding process introduces a coating material into a melt pool extending slightly into the underlying base metal, for example at interface zone 294 between laser cladding bead 288 and beveled surface 270. The energy from the laser subsequently melts the binding materials of the coating material resulting in a true metallurgical bond between the coating and the base material at interface 294.. When applied, the laser cladding material may have a greater hardness and/or wear resistance than the underlying base metal of rotary blade 260. In particular, where the laser cladding material has a higher metallurgical hardness than the base metal of rotary blade 260, the laser cladding material may also be less ductile and more brittle than the base metal of rotary cutting blade 260.

Following application of laser cladding material 288, and additional layers if provided, rotary blade 260 may further be heat treated. In a preferred embodiment, the heat treatment is an austempering process that is applied uniformly to the entire rotary cutting blade 260. A heat treatment process applied to the entire rotary blade 260 may thereby reduce the metallurgical hardness of the laser cladding material, but improve the retention of the laser cladding material on the base metal of the rotary blade 260 when the blade is subjected to impacts (e.g., ground, rocks, or other obstacles) during operation.

In other aspects, a portion of the rotary cutting blade may be hardened. In one embodiment, a portion of lower bottom surface 280, for example leading portion 302, may be heat treated to a metallurgical hardness greater than the hardness of the base metal of rotary cutting blade 260. For example, leading portion 302 proximate to leading edge 274 may be heat treated, for example laser heat treated, while the remainder of bottom surface 280 is not heat treated.

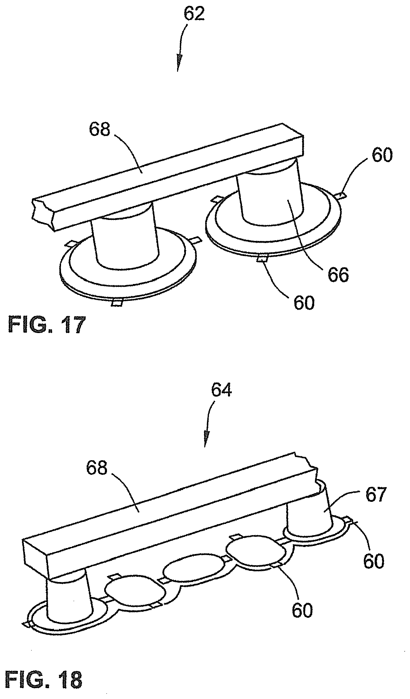

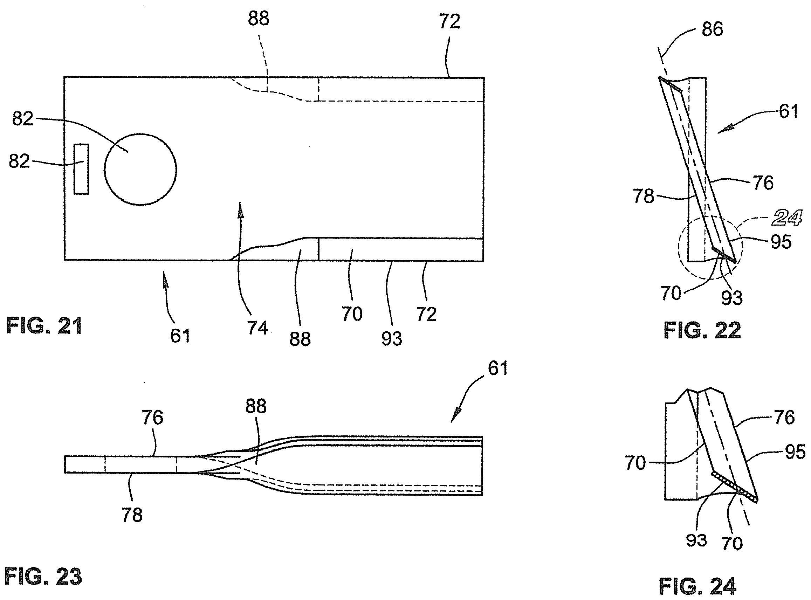

Referring to FIGs. 21-24, another embodiment of a crop cutting blade is shown. Blade 61 is provided with a cutting blade body 74 having opposed top and bottom side surfaces 76, 78. The cutting blade body 74 includes a base section that includes mounting apertures 82 for securing the cutting blade 61 to one of the mowers 62, 64 (similarly to blade 60, as shown in FIGs. 17 and 18), as well as a cutting wing section that defines a main plane 86. As can be seen, the cutting wing section is angularly offset from the base section through deformation of a transition section 88.

A beveled face 93 and a protected converging surface 95 are provided, which intersect to define cutting edge 72. Laser cladding 70 is applied to beveled face 93 to define a cutting edge impact surface 93. In a preferred embodiment, laser cladding 70 is a continuous layer on beveled face 93 and extends from cutting edge 72 towards bottom side surface 78. As shown in FIG. 24, laser cladding 70 may cover the entirety of beveled surface 93. In other embodiments, laser cladding 70 may cover at least 90 percent, at least 75 percent, or at least 50 percent of cutting edge impact surface 93, extending from cutting edge 72 towards bottom side surface 78.

As discussed above, laser cladding 70 can be built up in several layers upon the cutting edge impact surface 93. In a preferred embodiment, laser cladding 70 is applied to cutting edge impact surface 93 and tip 98, but is not applied to protected converging surface 95.

The Feed Mixer blades and Disc Mower blades are just a few examples of cutting blades this invention would be applicable on and the advantages of using laser cladding technology for the cutting edge for these blades. Other cutting blades this invention would be applicable on but not limited to are: Straw chopper blades, Sugar Cane blades, & Forage Harvestor blades. All these blades are common in the agricultural industry and would benefit from the advantages of this invention in similar ways as stated from the two previous examples (Feed Mixers & DMK blades). These other applications are covered herein.

Based on the foregoing, it is recognized that one or more of the following potential advantages and novel features or advantages may be realized according to different embodiments below:
Using laser cladding to create a cutting edge would give the blade edge superior hardness preventing wear.

Laser cladding creates a strong bond with the substrate preventing chipping of laser clad material and improving blade life.

Laser cladding provides good corrosion resistance improving the life of the blade edge.

Laser cladding can be configured to match existing part dimensions; this allows for parts to be a direct replacement for existing blades.

There is a wide range of options when choosing laser cladding material which makes laser cladding a very unique and versatile process that can be used for a variety of different applications.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. Accordingly, the scope of this invention is determined by claims appended hereto.

## Claims

1. An agricultural rotary cutting blade (61, 260) comprising:
a cutting blade body (74, 262), the cutting blade body (74, 262) having a first side surface (78, 278) and a second side surface (76, 280), wherein the cutting blade body (74, 262) is formed of a first material;
the cutting blade body (74, 262) having a beveled surface portion (93, 270, 272) between the first side surface (78, 278) and the second side surface (76, 280), the intersection between the beveled surface portion (93, 270, 272) and the second side surface (76, 280) defining a cutting edge (72, 284, 286);
a second material applied to the beveled surface portion (93, 270, 272) of the cutting blade body (74, 262), wherein the second material (70, 288) is a laser cladding material, having laser cladding beads (288, 296) not further sharpened to form a sharpened tip at a linear cutting edge (72, 284), wherein the second material does not extend onto the second side surface (76, 280), wherein the second material (70, 288) covers at least 25 percent of the beveled surface portion (93, 270, 272), and wherein the second material (70, 288) provides at least one of greater hardness and wear resistance relative to the first material and reduces wear experienced by the beveled surface (93, 270, 272).

2. The rotary cutting blade of claim 1, wherein the cutting blade body (262) comprises a mounting aperture (266) and a plane of rotation (282), and wherein the second side surface (280) is parallel to the plane of rotation (282).

3. The rotary cutting blade of claim 1, wherein the cutting blade body (74) comprises a mounting aperture (82) and a plane of rotation, and wherein the second side surface (76) is not parallel to the plane of rotation and is a protected surface when the rotary cutting blade (61) is rotated in the plane of rotation.

4. The rotary cutting blade of claim 1, wherein the second material (70, 288) is applied to the beveled surface portion (93, 270, 272) at a first thickness proximate to the cutting edge (72, 284, 286), and at a second thickness distal to the cutting edge (72, 284, 286).

5. The rotary cutting blade of claim 4, wherein the first thickness is greater than the second thickness.

6. The rotary cutting blade of claim 4, wherein the first thickness is between 0.3 mm and 3.0 mm, and wherein the second thickness is between 0.3 mm and 3.0 mm.

7. The rotary cutting blade of claim 1, wherein the rotary cutting blade (61, 260) is heat treated.

8. The rotary cutting blade of claim 7, wherein the rotary cutting blade (61, 260) is autempered.

9. The rotary cutting blade of claim 1, wherein the second material (70, 288) contacts the cutting edge (72, 284, 286).

10. The rotary cutting blade of claim 1, wherein the second material (70, 288) covers at least 50 percent of the beveled surface portion (93, 270, 272).

11. A method of forming an agricultural rotary cutting blade (61, 260), comprising the steps of:
providing a cutting blade (61, 260) having a cutting blade body (74, 262), the cutting blade body (74, 262) having a first surface (78, 278) and a second side surface (76, 280), and wherein the cutting blade body (74, 262) is formed of a first material;
providing a beveled surface portion (93, 270, 272) on the cutting blade body (74, 262) between the first surface (78, 278) and the second surface (76, 280), wherein the intersection of the second surface (76, 280) and the beveled cutting surface (93, 270, 272) defines a cutting edge (72, 284, 286);
laser cladding a second material (70, 288) to the beveled surface portion (93, 270, 272), wherein beads (288, 296) of the second cladding material (70, 288) are not further sharpened to form a sharpened tip at a linear cutting edge (72, 284), wherein the second material (70, 288) does not extend onto the second side surface (76, 280), and wherein the laser clad material (70, 288) provides at least one of greater hardness and wear resistance relative to the first material and reduces wear experienced by the beveled surface (93, 270, 272).

12. The method of claim 11, wherein the rotary cutting blade (61, 260) is heat treated after laser cladding.

13. The method of claim 11, wherein a portion of the rotary cutting blade (61, 260) is heat treated after laser cladding.

## Patentansprüche

1. Landwirtschaftliche Drehschneidklinge (61, 260), umfassend:
einen Schneidklingenkörper (74, 262), wobei der Schneidklingenkörper (74, 262) eine erste Seitenfläche (78, 278) und eine zweite Seitenfläche (76, 280) aufweist, wobei der Schneidklingenkörper (74, 262) aus einem ersten Material gebildet ist;
wobei der Schneidklingenkörper (74, 262) einen abgeschrägten Oberflächenabschnitt (93, 270, 272) zwischen der ersten Seitenfläche (78, 278) und der zweiten Seitenfläche (76, 280) aufweist, wobei der Schnitt zwischen dem abgeschrägten Oberflächenabschnitt (93, 270, 272) und der zweiten Seitenfläche (76, 280) eine Schneidkante (72, 284, 286) definiert;
ein zweites Material, das auf den abgeschrägten Oberflächenabschnitt (93, 270, 272) des Schneidklingenkörpers (74, 262) aufgebracht ist, wobei das zweite Material (70, 288) ein Laserauftragsmaterial ist, das Laserauftragswülste (288, 296) aufweist, die nicht weiter geschärft sind, um eine geschärfte Spitze an einer linearen Schneidkante (72, 284) zu bilden, wobei sich das zweite Material nicht auf die zweite Seitenfläche (76, 280) erstreckt, wobei das zweite Material (70, 288) mindestens 25 Prozent des abgeschrägten Oberflächenabschnitts (93, 270, 272) bedeckt und wobei das zweite Material (70, 288) im Vergleich zum ersten Material eine größere Härte und/oder Verschleißfestigkeit aufweist und den Verschleiß der abgeschrägten Oberfläche (93, 270, 272) verringert.

2. Drehschneidklinge nach Anspruch 1, wobei der Schneidklingenkörper (262) eine Montageöffnung (266) und eine Drehebene (282) aufweist, und wobei die zweite Seitenfläche (280) parallel zur Drehebene (282) ist.

3. Drehschneidklinge nach Anspruch 1, wobei der Schneidklingenkörper (74) eine Montageöffnung (82) und eine Drehebene aufweist, und wobei die zweite Seitenfläche (76) nicht parallel zur Drehebene ist und eine geschützte Fläche ist, wenn die Drehschneidklinge (61) in der Drehebene gedreht wird.

4. Drehschneidklinge nach Anspruch 1, wobei das zweite Material (70, 288) auf den abgeschrägten Oberflächenabschnitt (93, 270, 272) mit einer ersten Dicke in der Nähe der Schneidkante (72, 284, 286) und mit einer zweiten Dicke distal von der Schneidkante (72, 284, 286) aufgebracht ist.

5. Drehschneidklinge nach Anspruch 4, wobei die erste Dicke größer ist als die zweite Dicke.

6. Drehschneidklinge nach Anspruch 4, wobei die erste Dicke zwischen 0,3 mm und 3,0 mm liegt und die zweite Dicke zwischen 0,3 mm und 3,0 mm liegt.

7. Drehschneidklinge nach Anspruch 1, wobei die Drehschneidklinge (61, 260) wärmebehandelt ist.

8. Drehschneidklinge nach Anspruch 7, wobei die Drehschneidklinge (61, 260) bainitisiert ist.

9. Drehschneidklinge nach Anspruch 1, wobei das zweite Material (70, 288) die Schneidkante (72, 284, 286) berührt.

10. Drehschneidklinge nach Anspruch 1, wobei das zweite Material (70, 288) mindestens 50 Prozent des abgeschrägten Oberflächenabschnitts (93, 270, 272) bedeckt.

11. Verfahren zur Herstellung einer landwirtschaftlichen Drehschneidklinge (61, 260), das die folgenden Schritte umfasst:
Bereitstellen einer Schneidklinge (61, 260) mit einem Schneidklingenkörper (74, 262), wobei der Schneidklingenkörper (74, 262) eine erste Fläche (78, 278) und eine zweite Seitenfläche (76, 280) aufweist, wobei der Schneidklingenkörper (74, 262) aus einem ersten Material gebildet ist;
Bereitstellen eines abgeschrägten Oberflächenabschnitts (93, 270, 272) an dem Schneidklingenkörper (74, 262) zwischen der ersten Oberfläche (78, 278) und der zweiten Oberfläche (76, 280), wobei der Schnittpunkt der zweiten Oberfläche (76, 280) und der abgeschrägten Schneidoberfläche (93, 270, 272) eine Schneidkante (72, 284, 286) definiert;
Laserauftragsschweißen eines zweiten Materials (70, 288) auf den abgeschrägten Oberflächenabschnitt (93, 270, 272), wobei die Wülste (288, 296) des zweiten Auftragsschweißmaterials (70, 288) nicht weiter geschärft sind, um eine geschärfte Spitze an einer linearen Schneidkante (72, 284) zu bilden, wobei sich das zweite Material (70, 288) sich nicht auf die zweite Seitenfläche (76, 280) erstreckt, und wobei das laserbeschichtete Material (70, 288) eine größere Härte und/oder Verschleißfestigkeit im Vergleich zum ersten Material aufweist und den Verschleiß der abgeschrägten Oberfläche (93, 270, 272) verringert.

12. Verfahren nach Anspruch 11, wobei die Drehschneidklinge (61, 260) nach dem Laserauftrag wärmebehandelt wird.

13. Verfahren nach Anspruch 11, wobei ein Abschnitt der Drehschneidklinge (61, 260) nach dem Laserauftrag wärmebehandelt wird.

## Revendications

1. Lame de coupe rotative agricole (61, 260) comprenant :
un corps de lame de coupe (74, 262), le corps de lame de coupe (74, 262) ayant une première surface latérale (78, 278) et une seconde surface latérale (76, 280), dans laquelle le corps de lame de coupe (74, 262) est formé avec un premier matériau ;
le corps de lame de coupe (74, 262) ayant une partie de surface biseautée (93, 270, 272) entre la première surface latérale (78, 278) et la seconde surface latérale (76, 280), l'intersection entre la partie de surface biseautée (93, 270, 272) et la seconde surface latérale (76, 280) définissant une arête de coupe (72, 284, 286) ;
un second matériau appliqué sur la partie de surface biseautée (93, 270, 272) du corps de lame de coupe (74, 262), dans laquelle le second matériau (70, 288) est un matériau de plaquage au laser, ayant des bourrelets de plaquage au laser (288, 296) pas plus aiguisée afin de former une pointe aiguisée au niveau d'une arête de coupe linéaire (72, 284), dans laquelle le second matériau ne s'étend pas sur la seconde surface latérale (76, 280), dans laquelle le second matériau (70, 288) recouvre au moins 25 pour cent de la partie de surface biseautée (93, 270, 272), et dans laquelle le second matériau (70, 288) fournit au moins l'une parmi une dureté plus importante et une résistance à l'usure plus importante par rapport au premier matériau et réduit l'usure subie par la surface biseautée (93, 270, 272).

2. Lame de coupe rotative selon la revendication 1, dans laquelle le corps de lame de coupe (262) comprend une ouverture de montage (266) et un plan de rotation (282), et dans laquelle la seconde surface latérale (280) est parallèle au plan de rotation (282).

3. Lame de coupe rotative selon la revendication 1, dans laquelle le corps de lame de coupe (74) comprend une ouverture de montage (82) et un plan d'orientation et dans laquelle la seconde surface latérale (76) n'est pas parallèle au plan de rotation et est une surface protégée lorsque la lame de coupe rotative (61) tourne dans le plan de rotation.

4. Lame de coupe rotative selon la revendication 1, dans laquelle le second matériau (70, 288) est appliqué sur la partie de surface biseautée (93, 270, 272) à une première épaisseur à proximité de l'arête de coupe (72, 284, 286) et à une seconde épaisseur à distance de l'arête de coupe (72, 284, 286).

5. Lame de coupe rotative selon la revendication 4, dans laquelle la première épaisseur est supérieure à la seconde épaisseur.

6. Lame de coupe rotative selon la revendication 4, dans laquelle la première épaisseur est comprise entre 0,3 mm et 3,0 mm, et dans laquelle la seconde épaisseur est comprise entre 0,3 mm et 3,0 mm.

7. Lame de coupe rotative selon la revendication 1, dans laquelle la lame de coupe rotative (61, 260) est traitée thermiquement.

8. Lame de coupe rotative selon la revendication 7, dans laquelle la lame de coupe rotative (61, 260) est trempée.

9. Lame de coupe rotative selon la revendication 1, dans laquelle le second matériau (70, 288) est en contact avec l'arête de coupe (72, 284, 286).

10. Lame de coupe rotative selon la revendication 1, dans laquelle le second matériau (70, 288) couvre au moins 50 pour cent de la partie de surface biseautée (93, 270, 272).

11. Procédé pour former une lame de coupe rotative agricole (61, 260) comprenant les étapes suivantes :
prévoir une lame de coupe (61, 260) ayant un corps de lame de coupe (74, 262), le corps de lame de coupe (74, 262) ayant une première surface (78, 278) et une seconde surface latérale (76, 280), et dans lequel le corps de lame de coupe (74, 262) est formé avec un premier matériau ;
prévoir une partie de surface biseautée (93, 270, 272) sur le corps de lame de coupe (74, 262) entre la première surface (78, 278) et la seconde surface (76, 280), dans lequel l'intersection de la seconde surface (76, 280) et la surface de coupe biseautée (93, 270, 272) définit une arête de coupe (72, 284, 286) ;
plaquer au laser un second matériau (70, 288) sur la partie de surface biseautée (93, 270, 272), dans lequel des bourrelets (288, 296) du second matériau de plaque (70, 288) ne sont pas plus aiguisées pour former une pointe aiguisée au niveau d'une arête de coupe linéaire (72, 284), dans lequel le second matériau (70, 288) ne s'étend pas sur la seconde surface latérale (76, 280), et dans lequel le matériau de plaquage au laser (70, 288) fournit au moins l'une parmi une dureté supérieure et une résistance à l'usure supérieure par rapport au premier matériau et réduit l'usure subie par la surface biseautée (93, 270, 272).

12. Procédé selon la revendication 11, dans lequel la lame de coupe rotative (61, 260) est traitée thermiquement après plaquage au laser.

13. Procédé selon la revendication 11, dans lequel une partie de la lame de coupe rotative (61, 260) est traitée thermiquement après plaquage au laser.
